# EUROPÄISCHE PATENTSCHRIFT

(11) **EP 1 253 330 B1**
(45) Veröffentlichungstag und Bekanntmachung des Hinweises auf die Patenterteilung: **10.11.2004**
(21) Anmeldenummer: 02008068.5
(22) Anmeldetag: 11.04.2002
(51) Int. Cl.: F16B 12/14, F16B 12/24, A47B 13/08, A47B 77/00, F16B 5/02, F16B 5/00

(54) **Stossverbindung von Arbeitsplatten**
Butt joint for work tops
Joint bout à bout pour plans de travail

(30) Priorität: 28.04.2001 DE 10120932
(43) Veröffentlichungstag der Anmeldung: 30.10.2002
(73) Patentinhaber: Nolte-Küchen GmbH & Co. KG, 32584 Löhne (DE)
(72) Erfinder: Schöckinghoff, Josef, 32584 Löhne (DE)
(74) Vertreter: Elbertzhagen, Otto, Dipl.-Ing.

(56) Entgegenhaltungen:
- EP-B- 0 552 510
- DE-A- 2 101 833
- DE-A- 3 713 483
- GB-A- 2 221 740
- US-A- 1 602 658
- US-A- 3 826 056
- US-A- 5 588 269

## Beschreibung

Die Erfindung betrifft eine Stoßverbindung nach dem Oberbegriff des Patentanspruchs 1.

Eine offenkundig vorbenutzte Stoßverbindung für Arbeitsplatten.der als bekannt vorausgesetzten Art weist in die aneinander anliegenden Stirnflächen mündende Nuten mit parallel zueinander und rechtwinklig zur Trennfuge verlaufenden Nutflanken auf. In die Nuten werden nebeneinander der Breite der Nuten entsprechende, ebene Plättchen eingesetzt, die für eine Ausrichtung der Oberflächen der zu verbindenden Arbeitsplatten sorgen sollen. Die aneinander anliegenden Stirnflächen werden durch in die Arbeitsplatten eingelegte Spannanker miteinander verspannt. Durch Fertigungstoleranzen in der Nutbreite und der Dicke der Plättchen kann ein Versatz in der Oberfläche der Arbeitsplatten nicht ganz ausgeschlossen werden, so das die Arbeitsplatten bei ihrer gegenseitigen Verbindung zusätzlich sorgfältig ausgerichtet werden müssen. Das Ausrichten der Arbeitsplatten ist zeitaufwendig.

Es ist auch ein Zugkraftverbinder zum Zusammenpressen zweier Platten bekannt, der einen Zuganker aufweist, welcher quer zur Trennfuge der aneinanderliegenden Stirnkanten verläuft (DE 37 13 483 A1). Der Zuganker ist an seinen Enden jeweils an einer der Platten abgestützt. Mindestens eine der Platten ist mit einem Stellmittel versehen, welches dazu dient, die Lage der beiden Bauelemente zueinander senkrecht zur Achse des Zugankers feinfühlig einstellbar zu machen. Ein solcher Verbindungsbeschlag ist aufwendig. Er erlaubt zwar eine Ausrichtung der beiden zusammenstoßenden Plattenoberflächen unmittelbar oberhalb des Zugankers und möglicherweise auch noch im engen Randbereich, für eine Ausrichtung über die gesamte Länge der Stoßfuge wäre jedoch eine Vielzahl der aufwendigen Spannankervorrichtungen erforderlich, deren ordnungsgemäßer Einbau teuer wäre und zudem zu einer erheblichen Schwächung der Platten im Bereich der Stoßfuge führen müßte.

Es ist weiterhin bekannt (DE 1 818 534 U), nicht-metallische Teile von starr zu verbindenden Möbelstücken, vorzugsweise von nebeneinander gestellten, mit Arbeitsplatten abgedeckten Einzelküchenmöbeln für Einbauküchen, in der Weise auszubilden, daß sie an ihren Stirnflächen miteinander fluchtende, in gleicher Höhe verlaufende Längsnuten aufweisen. Die beiden Stirnflächen der Arbeitsplatten werden unter Beibehaltung eines Luftspalts aneinandergesetzt. Eine T-Profilleiste greift in die unterschiedlichen Längsnuten ein, der Steg dieser Profilleiste verläuft im Luftspalt unterhalb der Nuten. Oberhalb der T-Profilleiste wird ein Dichtstreifen aus elastischem Material in den Luftspalt eingesetzt. Die beiden Platten werden mittels einer gemeinsamen Spannschraube mit ihren Stirnflächen gegeneinander gezogen. Die Spannschraube überträgt die Spannkraft über quer durchsetzte Winkelstücke, welche sich einerseits an vertikalen Wänden abstützen, auf denen die Arbeitsplatten aufliegen und die andererseits jeweils in eine Ausnehmung an der Unterseite der Arbeitsplatten eingreifen. Eine solche Lösung erlaubt nicht die gewünschte, möglichst wenig sichtbare bündige Verbindungsstelle der Plattenoberflächen, sondern betont sogar noch die Trennfuge.

Es ist weiterhin bekannt, zwei stirnseitig mit Nut und Feder versehene Platten dadurch zu verbinden, daß Zuganker etwa in der Mitte der Plattendicke in quer zur Stoßfuge verlaufenden Bohrungen vorgesehen sind (US 1,602,658). Diese Zuganker enden in Kopfstücken, welche in senkrecht zur Plattenebene eingelassenen Senkbohrungen enden. Bei dieser Konstruktion erfolgt die Ausrichtung der Plattenoberflächen zueinander ausschließlich über den Formschluß mit Nut und Feder. Abgesehen davon, daß Ungenauigkeiten zu entsprechenden Ungenauigkeiten an der Verbindungsstelle führen, ist eine derartige Konstruktion für Holzspanplatten, aus denen Arbeitsplatten von Küchen üblicherweise bestehen, völlig ungeeignet, da mit Holzspanplatten keine direkt ineinandergreifenden Nut-Feder-Verbindungen herstellbar sind, welche ausreichend belastungsfähig wären.

Schließlich ist es auch noch bekannt, Plattenstücke zur Bildung größerer Platten auf Fertigungsstraßen dadurch zusammenzusetzen, daß in den aneinander angrenzenden Stirnflächen benachbarter Plattenstücke Nuten vorgesehen werden, die im zusammengestoßenen Zustand der Plattenstücke eine gemeinsame Kavität bilden (DE 692 11 115 T3) entsprechend EP 0 552 510 B2. Diese gemeinsame Kavität wird im ausgerichteten Zustand mit einem aushärtenden Kleber ausgefüllt. Ein solches Verbindungsverfahren ist ausschließlich in einer industriellen Fertigungsstätte für Platten anwendbar, zum Ansetzen von Plattenstükken am Aufstellungsort von Möbeln ist es ungeeignet.

Ausgehend von dem vorstehend erörterten Stand der Technik liegt der Erfindung die Aufgabe zugrunde, die Stoßverbindung der als bekannt vorausgesetzten Art so auszubilden, daß Arbeitsplatten bündig, ohne Versatz in der Arbeitsfläche, und einfach miteinander zu verbinden sind.

Die Lösung dieser Aufgabe erfolgt mit den Merkmalen des Patentanspruchs 1.

Bevorzugte Ausgestaltungen der Erfindung ergeben sich aus den Unteransprüchen.

Beim Spannen der Stoßverbindung werden die Arbeitsplatten gegeneinander zentriert. Die Verbindung ist durch die Keilwirkung der Ausrichtelemente spielfrei. Diese lassen sich vor dem Zusammenfügen der Arbeitsplatten leicht in eine der Längsnuten einlegen. In einer bevorzugten Ausführungsform werden die Ausrichtelemente in einer zusätzlichen Nut vorfixiert, so daß sie bei der Montage sicher an einer der zu verbindenden Arbeitsplatten gehalten werden. In einer weiteren, besonders bevorzugten Ausführungsform trägt das Ausrichtelement die Spannanker klemmend aufnehmende Durchgangsschlitze, die ein Zusammenspannen von Arbeitsplatten über Kopf erleichtern.

Nachstehend wird eine bevorzugte Ausführungsform der Erfindung anhand der Zeichnungen im einzelnen beschrieben. Es zeigen:
- Figur 1 -: eine Unteransicht auf einen Ausschnitt von durch einen Spannanker zusammengespannten Arbeitsplatten mit einem Ausrichtelement;
- Figur 2 -: einen Schnitt durch die Arbeitsplatten entlang der Schnittebene II - II in Fig. 1;
- Figur 3 -: eine perspektivische Ansicht einer Arbeitsplatte nach Fig. 1 mit in eine Längsnut eingesetzten Ausrichtelementen;
- Figur 4 -: eine vergrößerte perspektivische Ansicht eines Ausrichtelements gemäß Fig. 3;

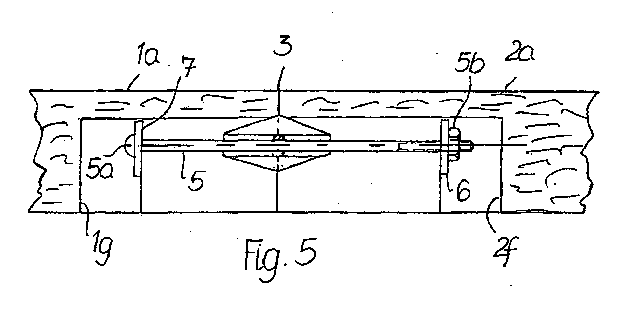

- Figur 5 -: einen Schnitt durch zwei miteinander verbundene Arbeitsplatten entlang der Schnittebene V - V in Fig. 1.

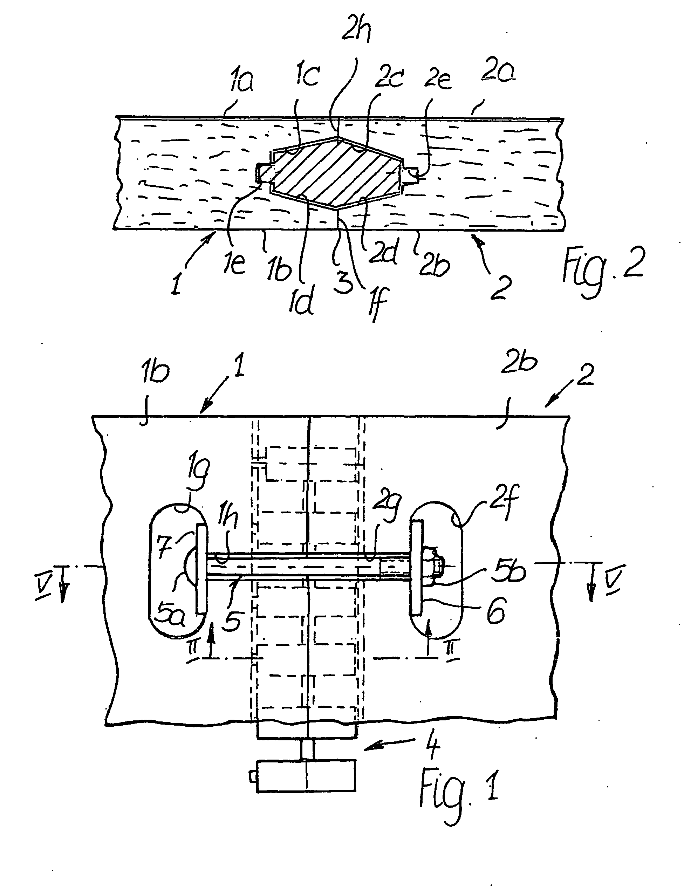

Zwei Arbeitsplatten 1 und 2 sind gemäß Fig. 1 und 2 ohne Spalt in ihrer gemeinsamen Trennfuge 3 und ohne Versatz zwischen ihren Arbeitsflächen 1a und 2a miteinander verbunden. Die Arbeitsplatten 1 und 2 weisen an ihren einander zugewandten Stirnflächen 1f und 2h je eine Längsnut auf, in die Ausrichtelemente 4 eingelegt sind. In den Arbeitsplatten 1 und 2 sind benachbart zur Trennfuge 3 zur Unterseite 1b und 2b offene Ausnehmungen 1g und 2f vorgesehen, die durch miteinander fluchtende Schraubenkanäle 1h und 2g untereinander verbunden sind.

In die Schraubenkanäle 1h und 2g sowie die Ausnehmungen 1g und 2f ist ein Spannanker 5 eingelegt, mit dessen Spannkraft die beiden Arbeitsplatten 1 und 2 mit ihren Stirnflächen 1f und 2h aneinander angepreßt werden. Der Spannanker 5 besitzt einen Spannkopf 5a und ist am gegenüberliegenden Ende mit einem Gewinde versehen, auf das eine Spannmutter 5b aufgeschraubt ist. Sowohl der Spannkopf 5a als auch die Spannmutter 5b sind mit je einer Druckplatte 6 und 7 unterlegt, um die Spannkraft über eine vergrößerte Auflagefläche in die Arbeitsplatten 1 und 2 einzuleiten.

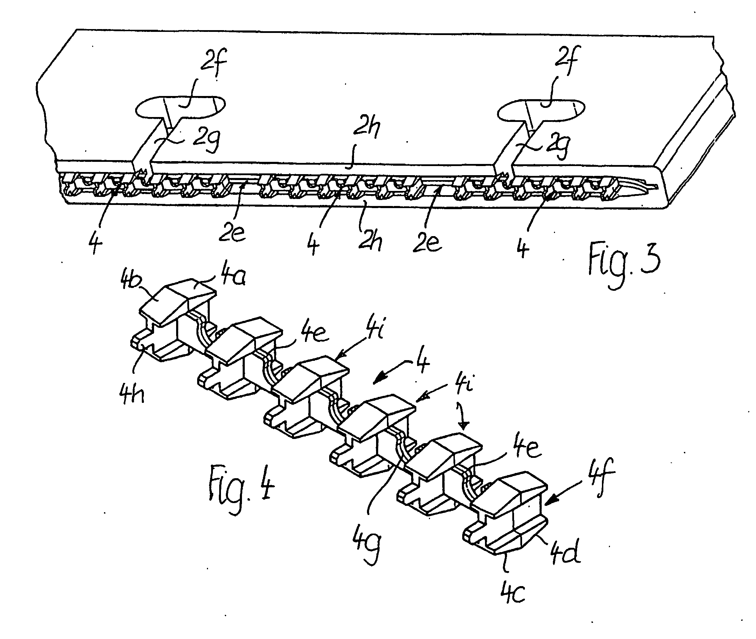

Die Längsnuten in den Arbeitsplatten 1 und 2 sind identisch ausgebildet. Die Längsnut in der Arbeitsplatte 1 weist zwei zur Arbeitsfläche 1a entgegengesetzt geneigte Seitenflanken 1c und 1d auf, die sich zur Trennfuge 3 hin voneinander entfernen. In der Arbeitsplatte 2 verläuft die obere Seitenflanke 2c im zusammengefügten Zustand entgegengesetzt zur Seitenflanke 1c und die untere Seitenflanke 2d entgegengesetzt zur Seitenflanke 1d. Der Nutgrund der Längsnuten in beiden Arbeitsplatten ist mit je einer Paßfedernut 1e und 2e versehen. In eine der beiden Paßfedernuten 1e oder 2e wird das Ausrichtelement 4 mit seitlich vorspringenden Paßfedern 4h eingesetzt. Die Paßfedern 4h fixieren die Ausrichtelemente 4 für die nachfolgende Montage an einer der Arbeitsplatten 1 oder 2. Wie aus Fig. 3 ersichtlich, werden mehrere Ausrichtelemente 4 mit Abstand zueinander in die Längsnuten eingesetzt.

Jedes Ausrichtelement 4 weist voneinander beabstandete Ausrichtbereiche 4i auf, die auf ihrer Oberseite zwei zueinander dachförmig geneigte Oberflächen 4a und 4b und auf ihrer Unterseite zwei zueinander geneigte, spiegelbildlich zu den Oberflächen 4a und 4b verlaufende Unterflächen 4c und 4d besitzen. Der die Oberflächen 4a und 4b tragende Teil der Ausrichtbereiche 4i ist über einen Quersteg 4f mit dem die Unterflächen 4c und 4d tragenden Teil verbunden. Die Ausrichtbereiche 4i sind ihrerseits durch einen Längssteg 4e miteinander verbunden. In dem Längssteg 4e sind zwischen je zwei Ausrichtbereichen 4i Durchgangsschlitze 4g vorgesehen, die von den Spannankern 5 durchsetzt werden können. Der Spannanker 5 wird dabei klemmend in einen der Durchgangsschlitze 4g eingedrückt.

Beim Einsetzen des Ausrichtelements 4 in die Arbeitsplatte 1 legt sich die Oberfläche 4b an die obere Seitenflanke 1c und die Unterfläche 4c an untere Seitenflanke 1d an. Die Paßfedern 4h werden dabei in die Paßfedernut 1e eingeschoben. Beim Zusammenfügen der Arbeitsplatten 1 und 2 legt sich die Oberfläche 4a an die Seitenflanke 2c an und die Unterfläche 4d an die Seitenflanke 2d. Durch das Spannen des Spannankers 5 wird ein eventuell noch vorhandenes Spiel zwischen den Oberflächen 4a und 4b bzw. den Unterflächen 4c und 4d und den zugehörigen Seitenflanken 1c und 1d bzw. 2c und 2d beseitigt. Damit sind die Arbeitsplatten 1 und 2 gegeneinander zentriert, so daß ihre Arbeitsflächen in einer gemeinsamen Ebene liegen.

Für die Zentrierung ist bereits ausreichend, wenn nur die beiden Oberflächen 4a und 4b oder nur die beiden Unterflächen 4c und 4d dachförmig zueinander geneigt sind und die jeweils gegenüberliegenden Flächen parallel zu den Arbeitsflächen 1a und 2a verlaufen. Die Längsnuten in den Stirnflächen 1f und 2h müssen dazu mit entsprechendem Querschnittsprofil versehen sein. Auch die Neigung nur zweier einander diametral gegenüberliegender Flächen der Ausrichtbereiche gegenüber den Arbeitsflächen 1a und 1b sowie der entsprechenden Seitenflanken zentriert die Arbeitsplatten zueinander in der Höhe.

Ebenso wie beim Stand der Technik wird die gebildete Stoßverbindung durch Leimzugabe in die Längsnuten endgültig fixiert. Die Gestaltung der Ausrichtelemente ist so gewählt, daß auch überschüssig zugegebener Leim beim Anziehen der Spannanker nicht aus der Trennfuge heraustritt.

## Patentansprüche

1. Stoßverbindung von Arbeitsplatten (1; 2), nämlich Küchenarbeitsplatten, die mit ihren gegenüberliegenden einander benachbarten Stirnflächen (1f; 2h) zusammengespannt sind und deren Arbeitsflächen (1a; 2a) im zusammengespannten Zustand bündig liegen, wobei in den Stirnflächen (1f; 2f) Längsnuten vorgesehen sind, die einen gemeinsamen Längskanal bilden, in dem die Trennfuge (3) durchgreifende Ausrichtelemente (4) liegen, die jeweils in beide Längsnuten eingreifen und die mit ihren Ober-(4a; 4b) und Unterflächen (4c; 4d) formschlüssig an den Seitenflanken (1c; 1d; 2c; 2d) beider Längsnuten anliegen,
**dadurch gekennzeichnet**,
da**ß** mindestens jeweils eine Seitenflanke (1c; 1d; 2c; 2d) der beiden Längsnuten geneigt zur Arbeitsfläche (1a; 2a) beider Arbeitsplatten (1; 2) verläuft und die an den Seitenflanken (1c; 1d; 2c; 2d) anliegenden Ober- und Unterflächen (4a; 4b; 4c; 4d) der Ausrichtelemente (4) einen jeweils bis zur Trennfuge (3) zunehmenden Abstand voneinander halten derart, daß die Arbeitsplatten (1; 2) im zusammengespannten Zustand zwangsweise bündig mit den benachbarten Arbeitsflächen (1a; 2a) zentrierbar sind, wobei die an den unterschiedlichen Arbeitsplatten (1; 2) vorgesehenen Längsnuten mit ihren oberen Seitenflanken (1c; 2c) ein zur Trennfuge (3) ansteigendes dachförmiges Profil und mit ihren unteren Seitenflanken (1d; 2d) ein entgegengesetzt gerichtetes dachförmiges Profil aufweisen, wobei die Ausrichtelemente (4) gleich profiliert sind.

2. Stoßverbindung nach Anspruch 1,
**dadurch gekennzeichnet,**
**daß** die Neigung der Seitenflanken (1c; 1d; 2c; 2d) zurmindest im wesentlichen derjenigen der daran anliegenden Flächen (4a; 4b; 4c; 4d) der Ausrichtelemente (4) entspricht.

3. Stoßverbindung nach Anspruch 1,
**dadurch gekennzeichnet**,
da**ß** die Neigung der Seitenflanken (1c; 1d; 2c; 2d) gleich der der Ober- bzw. Unterflächen (4a; 4b; 4c; 4d) der Ausrichtelemente (4) ist.

4. Stoßverbindung nach einem oder mehreren der Ansprüche 1 bis 3,
**dadurch gekennzeichnet**,
da**ß** die Ober- und Unterflächen (4a; 4b; 4c; 4d) der Ausrichtelemente (4) durchgehend an den Seitenflanken (1c; 1d; 2c; 2d) anliegen.

5. Stoßverbindung nach einem oder mehreren der Ansprüche 1 bis 4,
**dadurch gekennzeichnet,**
**daß** der dachförmige Profilverlauf symmetrisch zur Trennfuge (3) ist.

6. Stoßverbindung nach mindestens einem der Ansprüche 1 bis 5,
**dadurch gekennzeichnet,**
**daß** das Ausrichtelement (4) ein Kunststofformteil ist.

7. Stoßverbindung nach einem oder mehreren der Ansprüche 1 bis 6,
**dadurch gekennzeichnet**,
da**ß** das Ausrichtelement (4) eine Mehrzahl von durch einen gemeinsamen Längssteg (4e) verbundenen Ausrichtbereichen (4i) aufweist.

8. Stoßverbindung nach Anspruch 7,
**dadurch gekennzeichnet,**
**daß** der Längssteg (4e) zwischen den Ausrichtbereichen (4i) Durchgangsschlitze (4g) für einen Spannanker (5) aufweist.

9. Stoßverbindung nach Anspruch 8,
**dadurch gekennzeichnet,**
**daß** die Durchgangsschlitze (4g) zum klemmenden Fixieren des Spannankers (5) in dessen Einsetzlage ausgebildet sind.

10. Stoßverbindung nach einem oder mehreren der Ansprüche 1 bis 9,
**dadurch gekennzeichnet**,
da**ß** der Nutgrund mindestens einer Längsnut mit einer Paßfedernut (1e; 2e) versehen ist, in die eine Paßfeder (4h) des Ausrichtelements (4) klemmend eingreift.

11. Stoßverbindung nach einem oder mehreren der Ansprüche 1 bis 10,
**dadurch gekennzeichnet,**
**daß** jeweils ein oberer, zwei Oberflächen (4a; 4b) tragender Teil des Ausrichtbereichs (4i) mit einem unteren, zwei Unterflächen (4c; 4d) tragenden Teil durch einen Quersteg (4f) verbunden ist.

12. Stoßverbindung nach Anspruch 6,
**dadurch gekennzeichnet**,
da**ß** das Kunststofformteil aus Polyurethan (PU) besteht.

13. Stoßverbindung nach Anspruch 6,
**dadurch gekennzeichnet**,
da**ß** das Kunststofformteil aus Polyethylen (PE) besteht.

## Claims

1. Butt joint between worktops (1;2), namely kitchen worktops, which are tensioned together by their opposite, adjacent end faces (1f; 2h) and whose work surfaces (1a; 2a) lie flush with each other in the assembled state, whereby longitudinal grooves are provided in the end faces (1f; 2f) to form a common longitudinal channel in which alignment elements (4) are positioned which pass through the partition lines (3) and each engage in both longitudinal grooves and which with their top faces (4a; 4b) and their under faces (4c; 4d) positively adjoin the side flanks (1c; 1d; 2c; 2d) of the two longitudinal grooves, **characterised in that**
at least each one side flank (1c; 1d; 2c; 2d) of the two longitudinal grooves runs inclined to the work face (1a; 2a) of the two work tops (1; 2) and the upper and lower faces (4a; 4b; 4c; 4d) of the alignment elements (4) adjoining the side flanks (1c; 1d; 2c; 2d) each keep a distance from each other which increases up to the partition line (3) so that the worktops (1; 2) in the tensioned state can be centred automatically flush with adjacent work surfaces (1a; 2a) whereby the longitudinal grooves provided on the different worktops (1; 2) with their upper side flanks (1c; 2c) have a roof-shaped profile rising up to the partition line (3) and with their lower side flanks (1d; 2d) have an oppositely aligned roof-shaped profile whereby the alignment elements (4) have the same profile.

2. Butt joint according to claim 1 **characterised in that** the incline of the side flanks (1c; 1d; 2c; 2d) corresponds at least substantially to that of the adjoining faces (4a; 4b; 4c; 4d) of the alignment elements (4).

3. Butt joint according to claim 1 **characterised in that** the incline of the side flanks (1c; 1d; 2c; 2d) is the same as that of the top and under faces (4a; 4b; 4c; 4d) of the alignment elements (4).

4. Butt joint according to one or more of claims 1 to 3 **characterised in that** the top and under faces (4a; 4b; 4c; 4d) of the alignment elements (4) continuously bear against the side flanks (1c; 1d; 2c; 2d).

5. Butt joint according to one or more of claims 1 to 4 **characterised in that** the roof-shaped profiled path is symmetrical to the partition line (3).

6. Butt joint according to at least one of claims 1 to 5 **characterised in that** the alignment element (4) is a moulded plastics part.

7. Butt joint according to one or more of claims 1 to 6 **characterised in that** the alignment element (4) has a number of alignment zones (4i) connected through a common longitudinal web (4e).

8. Butt joint according to claim 7 **characterised in that** the longitudinal web (4e) between the alignment zones (4i) has full-length slits (4g) for a tie rod (5).

9. Butt joint according to claim 8 **characterised in that** the full-length slits (4g) are designed for fixing and clamping the tie rod (5) in its inserted position.

10. Butt joint according to one or more of claims 1 to 9 **characterised in that** the bottom of at least one longitudinal groove is provided with a spring key groove (1e; 2e) in which a spring key (4h) of the alignment element (4) engages with clamping fit.

11. Butt joint according to one or more of claims 1 to 10 **characterised in that** each one upper part of the alignment zone (4i) supporting top two faces (4a; 4b) is connected by a cross web (4f) to a lower part which supports two under faces (4c; 4d).

12. Butt joint according to claim 6 **characterised in that** the moulded plastics part is made of polyurethane (PU).

13. Butt joint according to claim 6 **characterised in that** the moulded plastics part is made of polyethylene (PE).

## Revendications

1. Joint bout à bout pour plans de travail (1; 2), notamment de plans de travail pour cuisines, qui sont serrés l'un contre l'autre, avec leurs surfaces frontales (1f; 2h) adjacentes, se faisant face, et sont à fleur, avec leurs surfaces de travail (1a ; 2a), à l'état serré. Des rainures longitudinales étant prévues dans les surfaces frontales (1f; 2f), lesquelles forment un canal longitudinal, commun dans lequel sont placés les éléments d'alignement (4) qui, mordant dans la ligne de joint (3), s'engagent dans les deux rainures longitudinales et épousent, avec leurs surfaces supérieures (4a; 4b) et leurs surfaces inférieures (4c; 4d), les flancs latéraux (1c; 1d; 2c; 2d) des deux rainures longitudinales, contre lesquels ils sont appliqués,
**caractérisé en ce que**,
au moins un flanc latéral (1c; 1d; 2c; 2d) de chacune des deux rainures longitudinale est incliné vers la surface de travail (1a; 2a) des deux plans de travail (1; 2) et que les surfaces supérieures et inférieures (4a; 4b; 4c; 4d) des éléments d'alignement (4), portant contre les flancs latéraux (1c; 1d; 2c; 2d) sont distancés, les uns les autres d'un intervalle croissant jusqu'au joint (3) de sorte que les plans de travail (1; 2), à l'état assemblé, soient obligatoirement centrées en alignement, avec les surfaces de travail voisines (1a; 2a), les rainures longitudinales, prévues dans les différents plans de travail (1; 2), formant avec leurs flancs latéraux supérieurs (1c; 2c) un profil en forme de toit montant vers la ligne de joint (3), et, avec leurs flancs latéraux inférieurs (1d; 2d), un profil en forme de toit, orienté à l'opposé, les éléments d'alignement (4) présentant le même profil.

2. Joint bout à bout selon la revendication 1,
**caractérisé en ce que**
l'inclinaison des flancs latéraux (1c; 1d; 2c; 2d) correspond au moins sensiblement à celle des surfaces y adjacentes (4a; 4b; 4c; 4d) des éléments d'alignement (4).

3. Joint bout à bout selon la revendication 1,
**caractérisé en ce que**
l'inclinaison des flancs latéraux (1c; 1d; 2c; 2d) est la même que celle des surfaces inférieures et supérieures (4a; 4b; 4c; 4d) des éléments d'alignement (4).

4. Joint bout à bout selon une ou plusieurs revendications 1 à 3,
**caractérisé en ce que**
les surfaces supérieures et inférieures (4a; 4b; 4c; 4d) des éléments d'alignement (4) portent en continu contre les flancs latéraux (1c; 1d; 2c; 2d) .

5. Joint bout à bout selon une ou plusieurs revendications 1 à 4,
**caractérisé en ce que**
l'évolution du profil en forme de toit est symétrique par rapport à la ligne de joint (3).

6. Joint bout à bout selon une ou plusieurs revendications 1 à 5,
**caractérisé en ce que**
l'élément éléments d'alignement (4) est une pièce moulée en matière plastique.

7. Joint bout à bout selon une ou plusieurs revendications 1 à 6,
**caractérisé en ce que**
l'élément éléments d'alignement (4) présente plusieurs zones d'alignement (4i) reliées par une patte longitudinale, commune (4e).

8. Joint bout à bout selon la revendication 7,
**caractérisé en ce que**
la patte longitudinale (4e) présente, entre les zones d'alignement (4i), des fentes de passage (4g) pour une tige de serrage (5).

9. Joint bout à bout selon la revendication 8,
**caractérisé en ce que**
les fentes de passage (4g) sont conçues pour fixer, par serrage, la tige de serrage (5) dans sa position d'insertion.

10. Joint bout à bout selon une ou plusieurs revendications 1 à 9,
**caractérisé en ce que**
le fond d'au moins une rainure longitudinale est pourvu d'une rainure pour ressort d'ajustage (le; 2e) dans laquelle un ressort d'ajustage de l'élément d'alignement (4) s'engage, en bloquand.

11. Joint bout à bout selon une ou plusieurs revendications 1 à 10,
**caractérisé en ce que**
chaque partie supérieure de la zone d'alignement (4i) portant deux surfaces supérieures (4a; 4b) est reliée, par une traverse (4f) à une partie inférieure, portant deux surfaces inférieures (4c; 4d) .

12. Joint bout à bout selon une ou plusieurs revendications 1 à 6,
**caractérisé en ce que**
la pièce moulée en matière plastique est en polyuréthane (PU).

13. Joint bout à bout selon une ou plusieurs revendications 1 à 6,
**caractérisé en ce que** la pièce moulée en matière plastique est en polyéthylène (PE).
